# EUROPEAN PATENT APPLICATION

(11) **EP 1 571 601 A2**
(43) Date of publication of application: **07.09.2005**
(21) Application number: 05002100.5
(22) Date of filing: 02.02.2005
(51) Int. Cl.: G07C 9/00, B60R 25/00

(54) **Combined individual authentication system**

(30) Priority: 01.03.2004 JP 2004056529
(71) Applicant: MATSUSHITA ELECTRIC INDUSTRIAL CO., LTD., Osaka 571-8501 (JP)
(72) Inventor: Yuhara, Masahiro, Yokohama-shi Kanagawa-ken, 246-0011 (JP)
(74) Representative: Pautex Schneider, Nicole Véronique

(57) **Abstract**

A combined individual authentication system 1 comprises a license information acquiring means 11 for acquiring license information from a storage media 3 which a driver 4 carries before or after a vehicle 2 runs, a biometric information acquiring means 12 for acquiring biometric information of the driver 4, a pre-stored information storing means 13 for storing pre-stored license and biometric information of the driver 4, a license information authenticating means 14 for authenticating the driver 4 based on the pre-stored license information, a first permitting means 15 for permitting at least one of functions which the vehicle 2 equipped, when the license information authenticating means 14 authenticates the driver 4 as an authenticated driver, a biometric information authenticating means 16 for authenticating the driver 4 based on the pre-stored biometric information, when the license information authenticating means 14 authenticates the driver 4 as an authenticated driver, and a second permitting means 17 for permitting at least one of functions which the vehicle 2 equipped.

## Description

### BACKGROUND OF THE INVENTION

### 1. Field of the Invention

This invention relates to a combined individual authentication system, and more particularly to a combined individual authentication system enabling to improve security by combining a plurality of individual authentication methods.

### 2. Description of the PriorArt

Up until now, there have been proposed a wide variety of on-vehicle individual authentication systems applied a personal IC card or a biometric feature, in order to improve antitheft security of this type one typical example of which is disclosed in Japanese Unexamined Patent Publication (Kokai) No. 2000-168502.

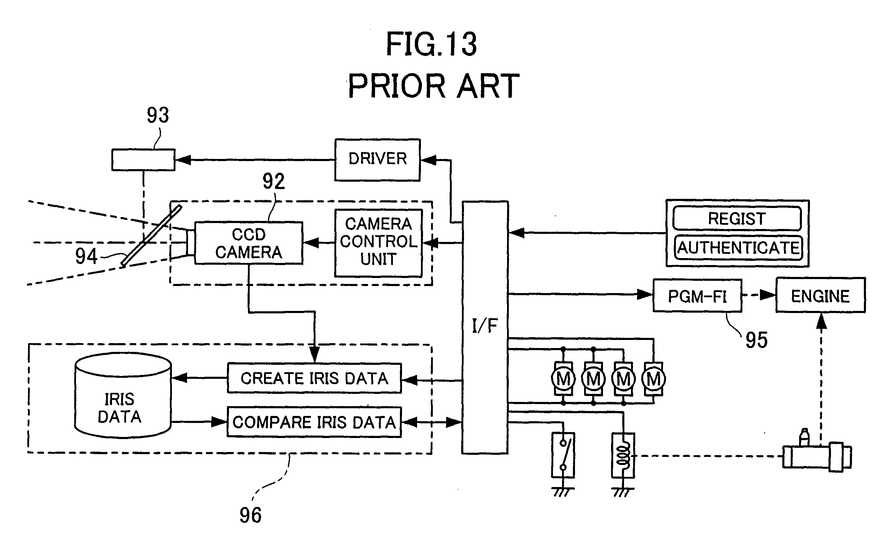

The conventional individual authentication system is shown in FIG. 13 as comprising a CCD camera 94 positioned on an instrument panel of a vehicle, and a half mirror 94 arranged on an optical axis of the CCD camera 94. The CCD camera 94 takes a photo of a driver's iris pattern while the driver is paying attention to driving information displayed on LCD 93 and projected on the half mirror 94. The conventional individual authentication system compares the driver's iris pattern with pre-stored iris patterns stored in a iris pattern register 96 to authenticate the driver, and permits start of the engine through a PGM-FI 95, an ignition switch, and door locks, etc., when the system authenticates the driver as an authenticated driver.

The conventional individual authentication system, however, encounters such a problem that it is difficult to keep enough antitheft security, because the conventional individual authentication system is kept to permit working of on-vehicle control apparatuses, when the conventional system authenticates the driver with one authentication method.

### SUMMARY OF THE INVENTION

It is therefore, an object of the present invention to provide a combined individual authentication system enabling to improve security by combining a plurality of individual authentication methods.

According to the first aspect of the present invention, there is provided a combined individual authentication system comprising; a license information acquiring means for acquiring license information from a storage media which a driver carries before or after a vehicle runs, a biometric information acquiring means for acquiring biometric information of the driver, a pre-stored information storing means for storing pre-stored license information and biometric information of the driver, a license information authenticating means for authenticating the driver based on the pre-stored license information, a first permitting means for permitting at least one of functions which the vehicle equipped, when the license information authenticating means authenticates the driver as an authenticated driver, a biometric information authenticating means for authenticating the driver based on the pre-stored biometric information, when the license information authenticating means authenticates the driver as an authenticated drive; and a second permitting means for permitting at least one of functions which the vehicle equipped.

The combined individual authentication system thus constructed as previously mentioned executes a biometric authenticating process only when the driver is authenticated by the license information authenticating process.

The license information acquiring means may be adapted to include an out-vehicle license information acquiring means mounted the outer side of the vehicle, and an in-vehicle license information acquiring means mounted the inner side of the vehicle.

The combined individual authentication system thus constructed as previously mentioned executes the license information authenticating process based license information acquired by the out-vehicle license information acquiring means and the in-vehicle license information acquiring means.

The first permitting means may be adapted to include a door unlocking means for unlocking doors of the vehicle, when the license information authentication means authenticates the driver as an authenticated driver based on license information acquired by the out-vehicle license acquiring means, and an engine start permitting means for permitting start of the engine of the vehicle when the license information authentication means authenticates the driver as an authenticated driver based on license information acquired by the in-vehicle license acquiring means.

The combined individual authentication system thus constructed as previously mentioned, unlocks or locks the doors when the driver is authenticated based on the license information acquired by the out-vehicle license information acquiring means, and controls starting an engine when the driver is authenticated based on the license information acquired by the in-vehicle license information acquiring means.

The biometric information acquiring means may be adapted to include at least one of a face information acquiring means for acquiring face information of the driver, an iris pattern acquiring means for acquiring iris pattern information of the driver, and a fingerprint information acquiring means for acquiring fingerprint information of the driver, the pre-stored information storing means stores at least one of the face information, the iris pattern information, and the fingerprint information as pre-stored face information, pre-stored iris pattern information, and pre-stored fingerprint information; and the biometric information authenticating means includes at least one of a face information authenticating means for authenticating the driver based the pre-stored face information, an iris pattern information authenticating means for authenticating the driver based the pre-stored iris pattern information, and a fingerprint information authenticating means for authenticating the driver based the pre-stored fingerprint information.

The combined individual authentication system thus constructed as previously mentioned executes the biometric authenticating process with the face information, the iris pattern information, or the finger print information.

The second permitting means may be adapted to permit working of a seat position controlling means for controlling a seat position of the vehicle.

The combined individual authentication system thus constructed as previously mentioned controls the seat position when the driver is authenticated based on the biometric information.

The license information acquiring means may be a out-vehicle license information acquiring means mounted on the outer side of the vehicle

The combined individual authentication system thus constructed as previously mentioned executes authenticating based on the license information acquired by the out-vehicle license information acquiring means.

The first permitting means may be a door unlocking means for unlocking doors of the vehicle, when the license information authenticating means authenticates the driver as an authenticated driver based on license information acquired by the out-vehicle license information authenticating means.

The combined individual authentication system thus constructed as previously mentioned unlocks or locks the doors the driver is authenticated based on license information acquired by the out-vehicle license information authenticating means.

The biometric information acquiring means may be adapted to include at least one of a face information acquiring means for acquiring face information of the driver, an iris pattern acquiring means for acquiring iris pattern information of the driver, and a fingerprint information acquiring means for acquiring fingerprint information of the driver, the pre-stored information storing means stored at least one of the face information, the iris pattern information, and the fingerprint information as pre-stored face information, pre-stored iris pattern information, and pre-stored fingerprint information, and the biometric information authenticating means includes at least one of a face information authenticating means for authenticating the driver based the pre-stored face information, an iris pattern information authenticating means for authenticating the driver based the pre-stored iris pattern information, and a fingerprint information authenticating means for authenticating the driver based the pre-stored fingerprint information.

The combined individual authentication system thus constructed as previously mentioned executes the biometric authenticating process with the face information, the iris pattern information, or the finger print information.

The second permitting means may be adapted to include an engine start permitting means for permitting start of an engine of the vehicle.

The combined individual authentication system thus constructed as previously mentioned, controls starting an engine when the driver is authenticated based on the license information acquired by the in-vehicle license information acquiring means.

The storage media is a memory included in an electronic driving license.

The combined individual authentication system thus constructed as previously mentioned executes the authenticating process using the electronic driving license.

The combined individual authentication system may further comprises a pre-stored information modifying means for modifying the pre-stored license information and the pre-stored biometric information stored in the pre-stored information storing means.

The combined individual authentication system thus constructed as previously mentioned can modify the pre-stores license information and the pre-stored biometric information.

### BRIEF DESCRIPTION OF THE DRAWINGS

The present invention and many of the attendant advantages thereof will be more clearly understood from the following detailed description taken in connection with the accompanying drawings, in which:
FIG 1 is a block diagram showing the combined individual authentication system of the preferred embodiment according to the present invention;
FIG 2 is a hardware diagram showing the combined individual authentication system of the preferred embodiment according to the present invention;
FIG. 3 is a block diagram of an electronic driving license;
FIG. 4 is a flowchart showing the first combined individual authenticating routine;
FIG. 5 is a table showing a sequence of before-running out-vehicle license information authenticating process;
FIG. 6 is a table showing a sequence of in-vehicle license information authenticating process;
FIG 7 is a table showing a sequence of fingerprint information authenticating process;
FIG. 8 is a table showing a sequence of after-running out-vehicle license information authenticating process:
FIG. 9 is a flowchart showing the second combined individual authenticating routine;
FIG 10 is a table showing a sequence of iris pattern information authenticating process;
FIG. 11 is a table showing a sequence of face information authenticating process;
FIG. 12 (A) and FIG. 12 (B) are tables to explain working sequence of a license information authenticating means and a biometric information authenticating means; and
FIG. 13 is a block diagram showing the conventional individual authentication system

### DESCRIPTION OF THE PREFERRED EMBODIMENTS

The following description will be directed to a plurality of preferred embodiments of the combined individual authentication system according to the present invention.

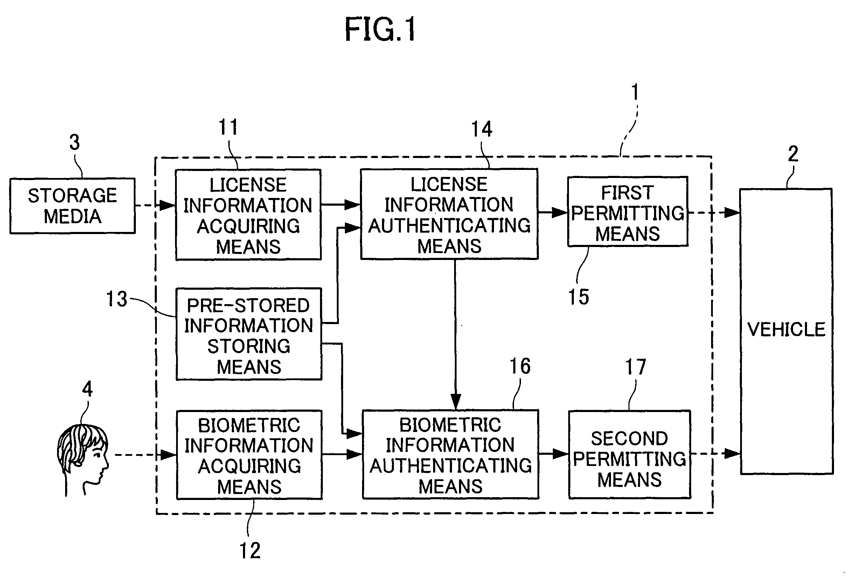

FIG 1 shows a functional diagram of the embodiment of the combined individual authentication system according to the present invention.

The combined individual authentication system 1 is shown in FIG. 1, and comprises a license information acquiring means 11 for acquiring license information from a storage media 3 which a driver 4 carries before or after a vehicle 2 runs, a biometric information acquiring means 12 for acquiring biometric information of the driver 4, a pre-stored information storing means 13 for storing pre-stored license information and biometric information of the driver 4, a license information authenticating means 14 for authenticating the driver 4 based on the pre-stored license information, a first permitting means 15 for permitting at least one of control functions which the vehicle 2 equipped, when the license information authenticating means 14 authenticates the driver 4 as an authenticated driver, a biometric information authenticating means 16 for authenticating the driver 4 based on the pre-stored biometric information, when the license information authenticating means 14 authenticates the driver 4 as an authenticated driver, and a second permitting means 17 for permitting at least one of control functions which the vehicle 2 equipped.

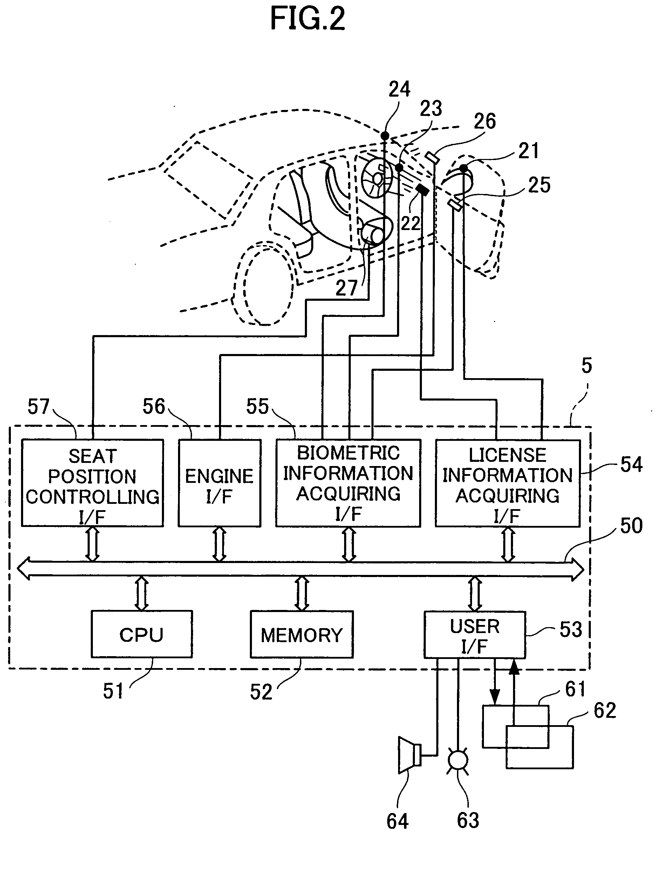

FIG. 2 shows a hardware diagram of the combined individual authentication system 1 of the preferred embodiment according to the present invention.

As shown in FIG. 2, the combined individual authentication system 1 includes a microprocessor 5, a license information acquiring unit working as the license information acquiring means 11, and a biometric information acquiring unit working as the biometric information acquiring means 12.

The microprocessor 5 is constituted by a central processing unit 51, hereinafter referred to as "CPU 51", a memory 52, an user interface 53, hereinafter referred to as "user I/F 53", a license information acquiring I/F 54, a biometric information acquiring I/F 55, an engine I/F 56, a seat position controlling I/F 57, and a bus 50 which combines the above elements each other.

To the user I/F 53, there are connected an LCD display panel 61, a touch panel 62 arranged on the LCD display panel 61, at least one light emitting diode 63, hereinafter referred to as "LED 63", and a speaker 64.

The LED 63 is applied to notify an operating state of the combined individual authentication system 1 to the driver 4 while the system 1 is operated to execute authenticating of the driver 4. The speaker 64 is applied to notify a result of authenticating of the driver 4, and accompanying control actions to the driver 4, when the system 1 initiates control actions based on a result of authenticating of the driver 4.

To the license information acquiring I/F 54, there are connected an out-vehicle license information acquiring unit 21 mounted on the outer side of the vehicle 2 (for example, the side-mirror), and an in-vehicle license information acquiring unit 22 mounted on the inner side of the vehicle 2 (for example, the side of the ignition switch of the vehicle 4).

To the biometric information acquiring I/F 55, there are connected a face information acquiring unit 23 mounted in the instrument panel of the vehicle 2, an iris pattern information acquiring unit 24 mounted on the sun visor, and a fingerprint acquiring unit 25 mounted on the inner side of the door.

To the engine I/F 56, there is connected an immobilizer 26 arranged in the engine room. Further, to the seat position controlling I/F 56, there is connected a seat position control unit 27 arranged in the driver's seat.

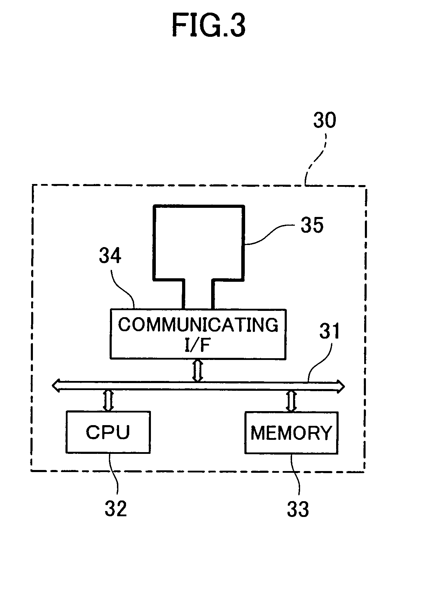

FIG 3 shows a constitutional diagram of an electronic driving license 30 working as the storage media 3.

As shown in FIG 3, the electronic driving license 30 includes a CPU 32, a memory 33, a communicating I/F 34, a bus 31, which combines the above elements each other. To the communicating I/F 34, an antenna 35 is connected.

In the memory 33, license information (name, address, birth date, gender etc.) of a plurality of drivers of electronic driving licenses is stored.

When the electronic driving license 30 is brought to the out-vehicle license information acquiring unit 21 or the in-vehicle license information acquiring unit 22, radio wave radiated from the out-vehicle license information acquiring unit 21 or the in-vehicle license information acquiring unit 22 is caught by the antenna 35. The electronic driving license 30 is powered by the radio wave, and transmits license information stored in the memory 33 to the out-vehicle license information acquiring unit 21 or the in-vehicle license information acquiring unit 22.

The operation of the combined individual authentication system 1 will be described hereinafter.

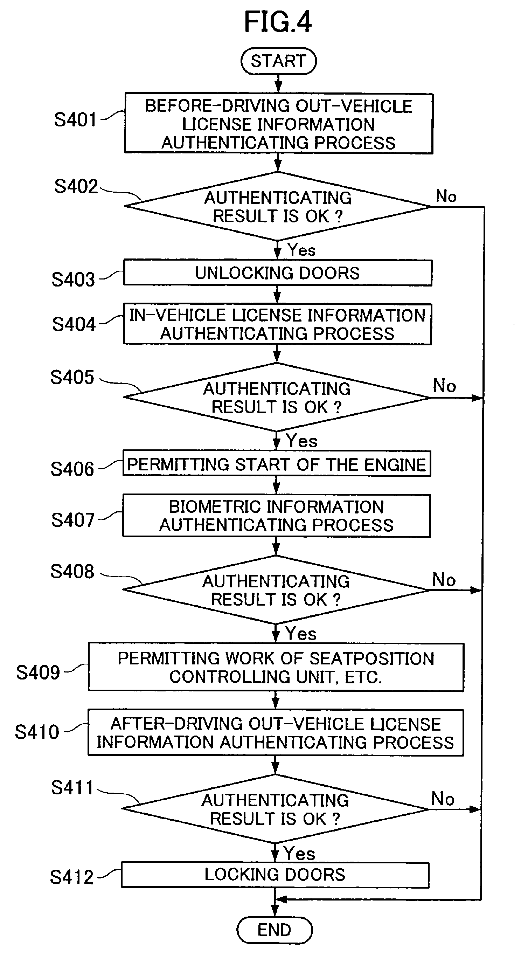

The CPU 51 of the combined individual authentication system 1 is operated to execute combined individual authenticating process in accordance with the first combined individual authentication routine shown in FIG. 4.

Firstly, the CPU 51 is operated to execute a before-driving out-vehicle license information authenticating process using license information acquired by the out-vehicle license information acquiring unit 21 and pre-stored license information stored in the memory 52 (step 401).

The CPU 51 is operated to determine whether or not the license information acquired by the out-vehicle license information acquiring unit 21 is consistent with the pre-stored license information (step 402). When the CPU 51 determines that the license information and the pre-stored license information are consistent, the CPU 51 unlocks doors of the vehicle 2, and sets "Entry OK flag". On the other hand, the CPU 51 determines that the license information and the pre-stored license information are not consistent, the CPU 51 does not unlock the doors, and maintains reset state of "Entry OK" flag to terminate the first combined individual authenticating process.

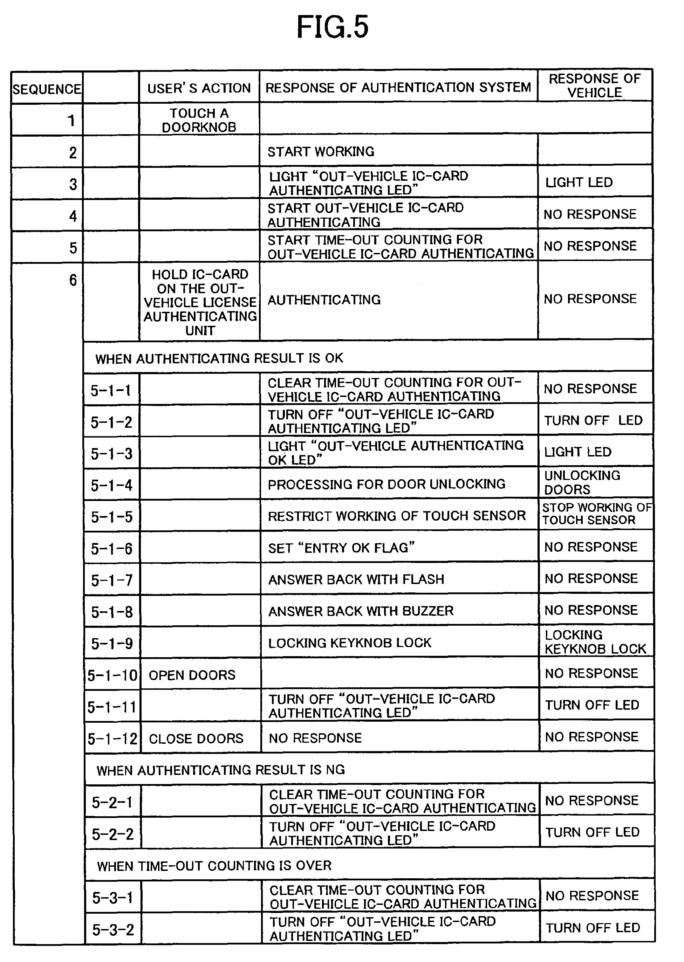

Before-running out-vehicle license authenticating table shown in FIG. 5 explains the detailed processes from step 401 to step 403.

In tables below, "SEAT 1" represents a process for positioning a seat at a position for acquiring an iris pattern information, "SEAT 2" represents a process for positioning a seat at a position for acquiring a face information, and "SEAT 3" represents a process for positioning a seat at a position for driving a vehicle.

Secondly, the CPU 51 is operated to execute an in-vehicle license information authenticating process using license information acquired by the in-vehicle license information acquiring unit 22 and pre-stored license information stored in the memory 52 (step 404), after the CPU 51 confirms that the "Entry OK flag" has been set

The CPU 51 determines whether or not the license information acquired by the in-vehicle license information acquiring unit 22 is consistent with the pre-stored license information (step 405). When the CPU 51 determines that the license information and the pre-stored license information are consistent, the CPU 51 unlocks doors of the vehicle 2, and sets "Entry OK flag". On the other hand, the CPU 51 determines that the license information and the pre-stored license information are not consistent, the CPU 51 does not unlock the doors, and maintains reset state of ''Entry OK" flag to terminate the first combined individual authenticating process.

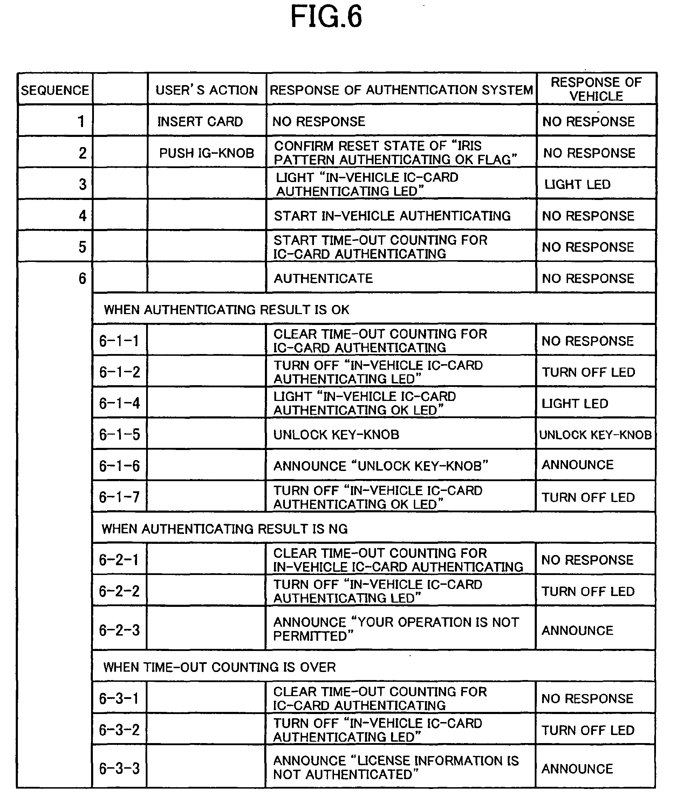

In-vehicle license authenticating table shown in FIG. 6 explains the detailed processes from step 404 to step 406.

Thirdly, the CPU 51 is operated to execute a biometric license information authenticating process using license information acquired by the biometric license information acquiring unit 22 and pre-stored biometric license information stored in the memory 52 (step 407), after the CPU 51 confirms that the "Entry OK" flag is in the set state.

The CPU 51 determines whether or not the license information acquired by the biometric license information acquiring unit is consistent with the pre-stored biometric license information (step 408). When the CPU 51 determines that the license information and the pre-stored biometric license information are consistent, the CPU 51 permits working of on-vehicle control apparatuses of the vehicle 2. On the other hand, the CPU 51 determines that the license information and the pre-stored biometric license information are not consistent, the CPU 51 does not permit working of control apparatuses to terminate the first combined individual authenticating process.

The on-vehicle control apparatuses mean a seat position control apparatus, and a transmitter for transmitting operating information of the vehicle, etc..

The CPU 51 is operated to execute a fingerprint license information authenticating process using fingerprint information acquired by the fingerprint information acquiring unit 25 and pre-stored fingerprint license information stored in the memory 52 (step 407), when the fingerprint information is applied as the biometric information.

The CPU 51 determines whether or not the license information acquired by the biometric license information acquiring unit is consistent with the pre-stored biometric license information (step 408). When the CPU 51 determines that the license information and the pre-stored biometric license information are consistent, the CPU 51 permits working of the driver's seat position control apparatus 27 of the vehicle 2. On the other hand, the CPU 51 determines that the license information and the pre-stored biometric license information are not consistent, the CPU 51 does not permit working of the driver's seat position control apparatus 27 of the vehicle 2 to terminate the license information authenticating process.

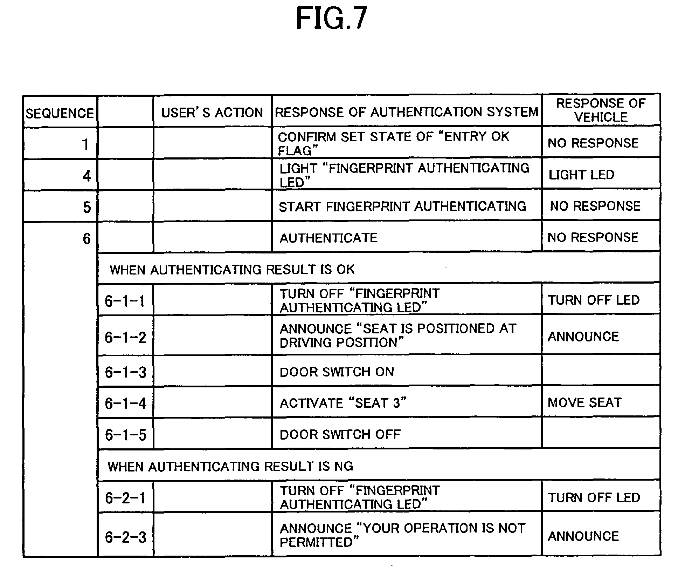

Fingerprint information authenticating table shown in FIG. 7 explains the processes from step 407 to step 409 when the fingerprint information is applied as the biometric information.

It is obvious for a person with ordinary skill in the art that the face information or the iris pattern information can be applied as the biometric information.

When the doors are locked after the vehicle 2 finishes to run, the CPU 51 executes an after-running license information authenticating process using license information acquired by the out-vehicle license information acquiring unit 21 and pre-stored license information stored in the memory 52 (step 410), after the CPU 51 determines that "Entry OK flag" is in the set state.

The CPU 51 determines whether or not the license information acquired by the out-vehicle license information acquiring unit 21 is consistent with the pre-stored license information (step 411). When the CPU 51 determines that both are consistent, the CPU 51 locks the doors of the vehicle 2, resets "Entry OK" flag, and controls the driver's seat position for the next running.

When the CPU 51 determines that both are not consistent, the CPU 51 leaves the set state of "Entry OK" flag to terminate the combined individual authenticating process.

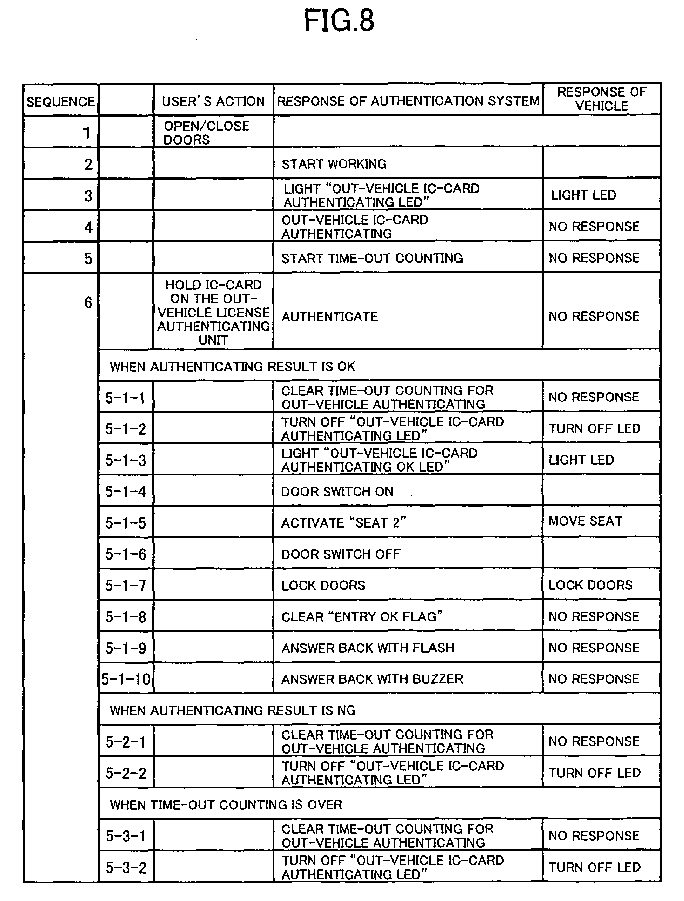

After-running out-vehicle information authenticating table shown in FIG. 8 explains the detailed processes from step 410 to step 412.

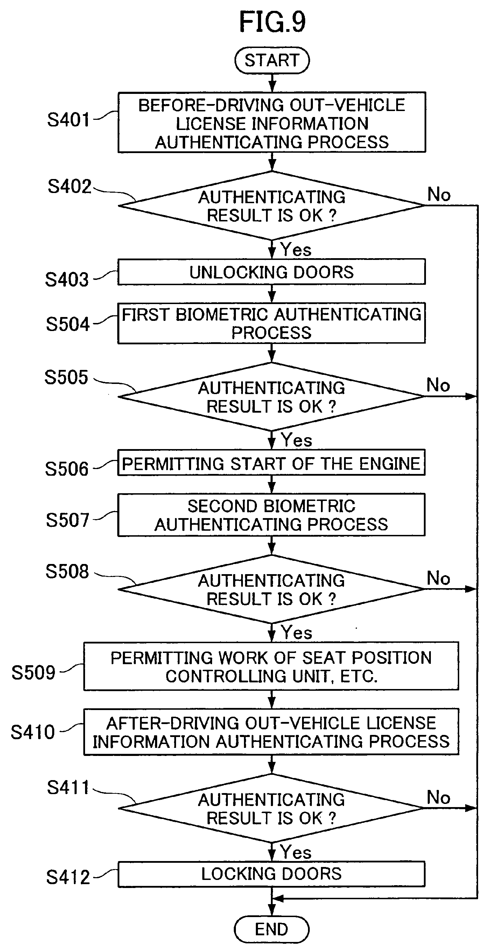

FIG. 9 shows the flowchart of a second combined authenticating routine, and steps for executing the same processes as the first combined authenticating routine are assigned the same step numbers to omit the detailed explanation.

The CPU 51 executes a first biometric authenticating process after executing the before-running out-vehicle authenticating steps (step 401- step 403). The CPU 51 executes the first biometric authenticating process (step 504) by applying a piece of biometric information acquired by the biometric information acquiring unit and a pieces of biometric information stored in the memory 52, after confirming that "Entry OK" flag is in the set state.

The CPU 51 determines whether or not the biometric information acquired by the biometric information acquiring unit is consistent with the pre-stored biometric information (step 505). When the CPU 51 determines that both are consistent, the CPU 51 permits start of the engine by unsetting immobilizer 26. When the CPU 51 determines that both are not consistent, the CPU 51 terminates the first combined individual authenticating routine without permitting start of the engine by unsetting immobilizer 26.

Secondly, the CPU 51 executes the second biometric authenticating process (step 507) by applying a biometric information acquired by the biometric information acquiring unit and a pieces of biometric information stored in the memory 52, after permitting start of the engine by unsetting immobilizer 26 (step S506).

The CPU 51 determines whether or not the biometric information acquired by the biometric information acquiring unit is consistent with the pre-stored biometric information (step 508). When the CPU 51 determines that both are consistent, the CPU 51 permits work of on-vehicle controlling apparatus (foe example, the seat position control apparatus). When the CPU 51 determines that both are not consistent, the CPU 51 terminates the combined individual authenticating routine without permitting work of on-vehicle controlling apparatus.

The CPU 51 executes the after-running out-vehicle license authenticating steps (step S410-step S412), after the vehicle 2 completes running.

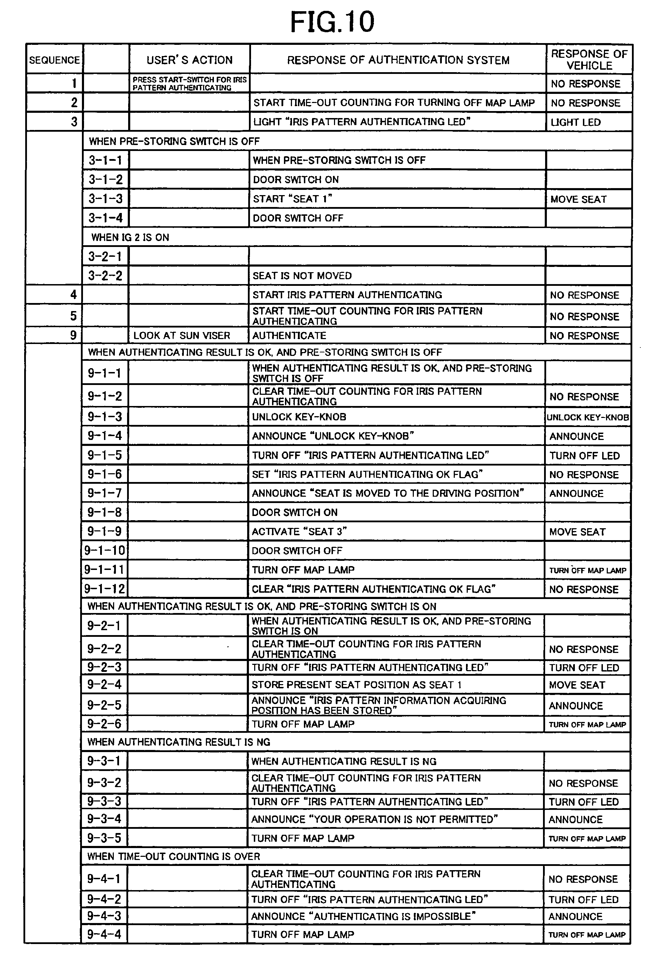

Iris pattern information authenticating table is shown in FIG. 10, when the first biometric information is iris pattern information. When the iris pattern information authenticating is executed, the CPU 51 shifts the seat position to the pre-determined position pre-stored at the address defined by "SEAT 1"of the memory 52 (Sequence No. 3-1-3), because the distance of the eyes of the driver 4 to the iris pattern information acquiring unit 24 is necessary to maintain the adequate distance to take a photo of clear iris pattern.

When the seat arrives at the predetermined position, the CPU 51 is operated to take a photo of the driver's iris pattern with the iris pattern information acquiring unit 24, and executes authenticating by comparing the driver's iris pattern with iris patterns pre-stored in the memory 52. When the CPU 51 determines that the driver's iris pattern is consistent with one of the pre-stored iris patterns, the CPU 51 unsets the immobilizer 26 and permits unlocking the key-knob (Sequence No. 9-1-3).

After that, the CPU 51 is operated to shift the seat to the driving position (Sequence No. 9-1-9).

The seat position stored at "SEAT 1" may be added or modified (Sequence No. 9-2-1 - Sequence No. 9-2-6)

When the driver 4 adds a new seat position, it is enough for the driver 4 to take a photo of the driver's iris pattern under the condition that the driver 4 sets a registering switch mounted near the iris pattern information acquiring unit 24. The seat position when the iris pattern is acquired is stored as the new seat position.

The new seat position may be stored in accordance with commands acquired through the touch panel 62 while the LCD display panel 61 displays a message notifying that whether or not the new seat position is added

The first biometric information may be face information or fingerprint information.

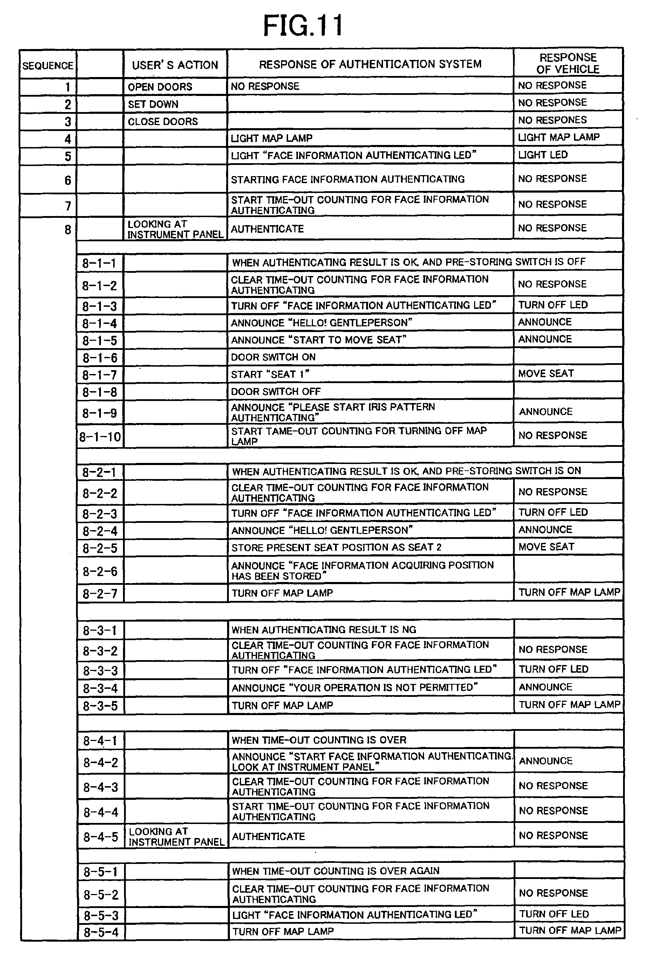

Iris pattern information authenticating table is shown in FIG. 11, to indicate that the second biometric information is face information. The second biometric information may be iris pattern information or fingerprint information.

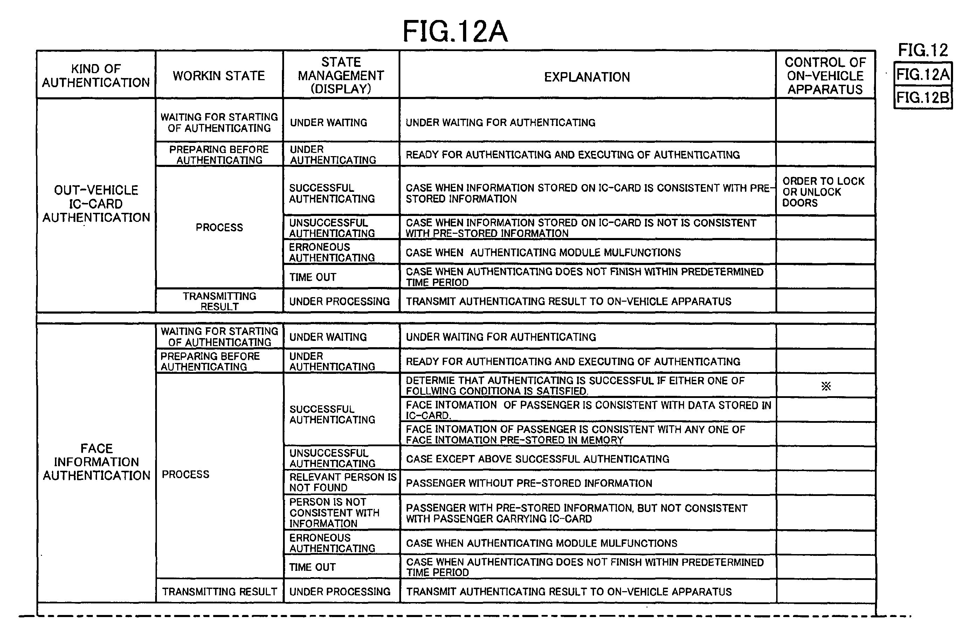

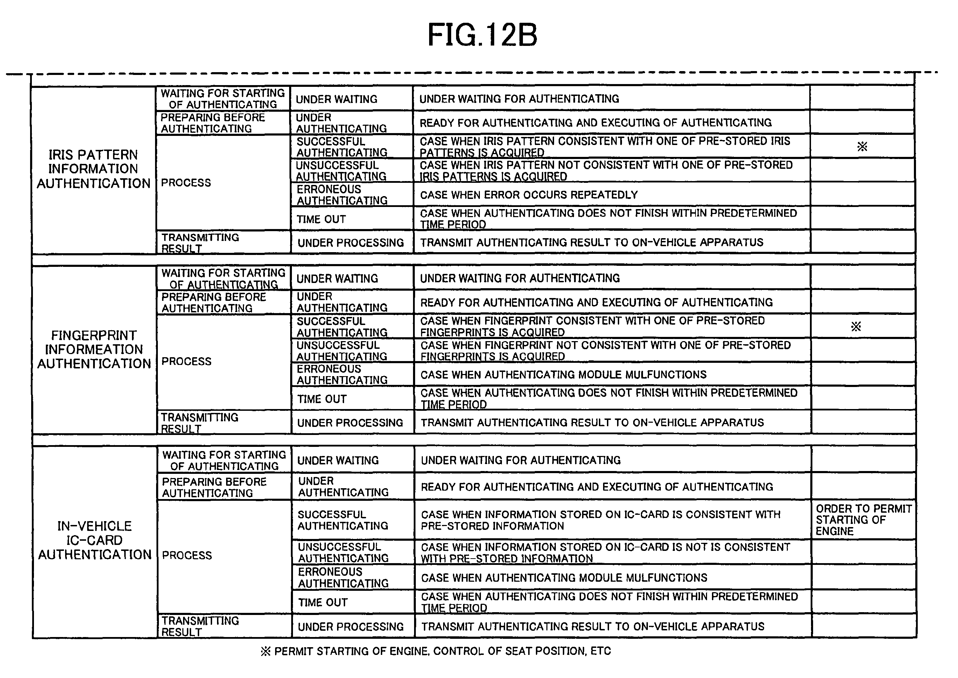

License information and biometric information authenticating table is shown in FIG. 12.

As described above, the combined authenticating system according to the present invention can improve security by applying the license information authenticating means and the biometric information authenticating means, and is useful for a authenticating system.

## Claims

1. A combined individual authentication system (1) comprising:
a license information acquiring means (11) for acquiring a piece of license information from a storage media (3) which a driver (4) carries before or after a vehicle (2) runs;
a biometric information acquiring means (12) for acquiring a piece of biometric information of said driver (4);
a pre-stored information storing means (13) for storing pieces of pre-stored license information and biometric information of said driver (4);
a license information authenticating means (14) for authenticating said driver (4) based on said pre-stored license information;
a first permitting means (15) for permitting at least one of functions which said vehicle (2) equipped when said license information authenticating means (14) authenticates said driver (4) as an authenticated driver;
a biometric information authenticating means (16) for authenticating said driver (4) based on said pre-stored biometric information when said license information authenticating means (14) is operated to authenticate said driver (4) as an authenticated driver, and
a second permitting means (17) for permitting at least one of functions which said vehicle (2) equipped.

2. A combined individual authentication system (1) as set forth in claim 1, in which
said license information acquiring means (11) includes an out-vehicle license information acquiring means mounted the outer side of said vehicle (2), and an in-vehicle license information acquiring means mounted the inner side of said vehicle (2).

3. A combined individual authentication system (1) as set forth in claim 2, in which
said first permitting means (15) includes a door unlocking means for unlocking the doors of said vehicle (2) when said license information authentication means (14) authenticates said driver (4) as an authenticated driver based on said license information acquired by said out-vehicle license acquiring means, and an engine start permitting means for permitting start of the engine of said vehicle when said license information authentication means (14) authenticates said driver (4) as an authenticated driver based on said license information acquired by said in-vehicle license acquiring means.

4. A combined individual authentication system (1) as set forth in claim 2 or 3, in which
said biometric information acquiring means (12) includes a face information acquiring means for acquiring face information of said driver (4), an iris pattern acquiring means for acquiring iris pattern information of said driver (4), and a fingerprint information acquiring means for acquiring fingerprint information of said driver (4);
said pre-stored information storing means (13) stores at least one of said face information, said iris pattern information, and said fingerprint information as pre-stored face information, pre-stored iris pattern information, and pre-stored fingerprint information; and
said biometric information authenticating means (12) includes at least one of a face information authenticating means for authenticating said driver (4) based said pre-stored face information, an iris pattern information authenticating means for authenticating said driver (4) based said pre-stored iris pattern information, and a fingerprint information authenticating means for authenticating said driver (4) based said pre-stored fingerprint information.

5. Acombined individual authentication system (1) as set forth in claim 4, in which
said second permitting means (17) is adapted to permit working of a seat position controlling means for controlling a seat position of said vehicle (2).

6. Acombined individual authentication system (1) as set forth in claim 1, in which
said license information acquiring means (11) is a out-vehicle license information acquiring means mounted on the outer side of said vehicle.

7. A combined individual authentication system (1) as set forth in claim 6, in which
said first permitting means (15) is a door unlocking means for unlocking doors of said vehicle, when said license information authenticating means (14) authenticates said driver (4) as an authenticated driver based on license information acquired by said out-vehicle license information authenticating means.

8. A combined individual authentication system (1) as set forth in claim 5 or 6, in which
said biometric information acquiring means (12) includes at least one of a face information acquiring means for acquiring face information of said driver (4), an iris pattern acquiring means for acquiring iris pattern information of said driver (4), and a fingerprint information acquiring means for acquiring fingerprint information of said driver (4);
said pre-stored information storing means (13) stored at least one of said face information, said iris pattern information, and said fingerprint information as pre-stored face information, pre-stored iris pattern information, and pre-stored fingerprint information; and
said biometric information authenticating means (12) includes a face information authenticating means for authenticating said driver (4) based said pre-stored face information, an iris pattern information authenticating means for authenticating said driver (4) based said pre-stored iris pattern information, and a fingerprint information authenticating means for authenticating said driver (4) based said pre-stored fingerprint information.

9. A combined individual authentication system (1) as set forth in claim 8, in which
said second permitting means (17) includes an engine start permitting means for permitting start of an engine of said vehicle.

10. A combined individual authentication system (1) as set forth in one of claims 1 - 9, in which
said storage media (3) is a memory included in an electronic driving license.

11. A combined individual authentication system (1) as set forth in any one of claims 1 - 10, which further comprises a pre-stored information modifying means for modifying said pre-stored license information and said pre-stored biometric information stored in said pre-stored information storing means (13).

12. A combined individual authentication method comprising:
a license information acquiring step of acquiring a piece of license information from a storage media which a driver (4) carries before or after a vehicle runs;
a biometric information acquiring step of acquiring a piece of biometric information of said driver(4);
a pre-stored information storing step for storing pieces of pre-stored license and biometric information of said driver(4);
a license information authenticating step of authenticating said driver (4) based on said pre-stored license information;
a first permitting step of permitting at least one of functions which said vehicle equipped, when said license information authenticating step authenticates said driver as an authenticated driver,
a biometric information authenticating step of authenticating said driver based on said pre-stored biometric information when said license information authenticating step is operated to authenticate said driver as an authenticated driver; and
a second permitting step of permitting at least one of functions which said vehicle equipped.

13. A combined individual authentication method as set forth in claim 12, in which
said license information acquiring step includes an out-vehicle license information acquiring step of acquiring license information with an out-vehicle license information acquiring apparatus mounted the outer side of said vehicle, and an in-vehicle license information acquiring step of acquiring license information with an in-vehicle license information acquiring apparatus mounted the inner side of said vehicle.

14. A combined individual authentication method as set forth in claim 13, in which
said first permitting step includes a door unlocking step of unlocking doors of said vehicle when said license information authentication step is of authenticating said driver (4) as an authenticated driver based on license information acquired by said out-vehicle license acquiring apparatus, and an engine start permitting step of permitting start of the engine of said vehicle when said license information authentication step authenticates said driver (4) as an authenticated driver based on license information acquired by said in-vehicle license acquiring apparatus.

15. A combined individual authentication method as set forth in claim 13 or 14, in which
said biometric information acquiring step includes a face information acquiring step of acquiring face information of said driver (4), an iris pattern acquiring step of acquiring iris pattern information of said driver (4), and a fingerprint information acquiring step of acquiring fingerprint information of said driver (4);
said pre-stored information storing step stores said face information, said iris pattern information, and said fingerprint information as pre-stored face information, pre-stored iris pattern information, and pre-stored fingerprint information; and
said biometric information authenticating step includes a face information authenticating step of authenticating said driver (4) based said pre-stored face information, an iris pattern information authenticating step of authenticating said driver (4) based said pre-stored iris pattern information, and a fingerprint information authenticating step of authenticating said driver (4) based said pre-stored fingerprint information.

16. A combined individual authentication method as set forth in claim 15, in which
said second permitting step includes at least a seat position controlling step of controlling a seat position of said vehicle.

17. A combined individual authentication method as set forth in claim 12, in which
said license information acquiring step is a out-vehicle license information acquiring step of acquiring license information with out-vehicle license information acquiring apparatus mounted on the outer side of said vehicle.

18. A combined individual authentication method as set forth in claim 17, in which
said first permitting step is a door unlocking step of unlocking doors of said vehicle, when said license information authenticating step authenticates said driver (4) as an authenticated driver based on license information acquired at said out-vehicle license information authenticating step.

19. A combined individual authentication method as set forth in claim 16 or 17, in which
said biometric information acquiring step includes at least one of a face information acquiring step of acquiring face information of said driver(4), an iris pattern acquiring step of acquiring iris pattern information of said driver(4), and a fingerprint information acquiring step of acquiring fingerprint information of said driver(4);
said pre-stored information storing step stored said face information, said iris pattern information, and said fingerprint information as pre-stored face information, pre-stored iris pattern information, and pre-stored fingerprint information; and
said biometric information authenticating step includes a face information authenticating step of authenticating said driver(4) based said pre-stored face information, an iris pattern information authenticating step of authenticating said driver(4) based said pre-stored iris pattern information, and a fingerprint information authenticating step of authenticating said driver(4) based said pre-stored fingerprint information.

20. A combined individual authentication method as set forth in claim 19, in which
said second permitting step includes at least an engine start permitting step of permitting start of an engine of said vehicle.

21. A combined individual authentication method as set forth in any one of claims 12 - 20, which further comprises a pre-stored information modifying step of modifying said pre-stored license information and said pre-stored biometric information stored at said pre-stored information storing step.
